Europäisches Patentamt

European Patent Office

Office européen des brevets

(11) Numéro de publication : **0 360 716 B1**

# (12) FASCICULE DE BREVET EUROPEEN

(45) Date de publication du fascicule du brevet :
**23.12.92 Bulletin 92/52**

(21) Numéro de dépôt : **89440095.1**

(22) Date de dépôt : **13.09.89**

(51) Int. Cl.⁵ : **A01D 34/66**

(54) **Faucheuse à patins perfectionnés.**

(30) Priorité : **13.09.88 FR 8812071**

(43) Date de publication de la demande :
**28.03.90 Bulletin 90/13**

(45) Mention de la délivrance du brevet :
**23.12.92 Bulletin 92/52**

(84) Etats contractants désignés :
**AT BE CH DE ES FR GB IT LI NL**

(56) Documents cités :
**EP-A- 0 099 314**
**EP-A- 0 110 812**
**EP-A- 0 223 302**

(56) Documents cités :
**EP-A- 0 260 750**
**FR-A- 2 377 755**
**FR-A- 2 394 239**
**GB-A- 2 089 636**
**GB-A- 2 166 032**

(73) Titulaire : **KUHN S.A.**
**4, Impasse des Fabriques**
**F-67700 Saverne (FR)**

(72) Inventeur : **Frumholtz, Johnny**
**10a, rue des Capucines**
**F-67700 Saverne (FR)**
Inventeur : **Helfer, Roland**
**1, rue d'Alsace**
**F-67450 Lampertheim (FR)**

Jouve, 18, rue Saint-Denis, 75001 PARIS

## Description

La présente invention concerne une faucheuse comportant un groupe de fauche muni d'une barre de coupe qui comporte une poutre porteuse et des organes de coupe rotatifs s'étendant au-dessus de la poutre porteuse et tournant chacun autour d'un axe géométrique dirigé vers le haut, une partie au moins de ces organes de coupe rotatifs étant guidés en rotation dans la poutre porteuse, le groupe de fauche étant par ailleurs muni de patins par l'intermédiaire desquels la barre de coupe glisse sur le sol pendant le travail, chacun de ces patins étant lié à la barre de coupe au moyen d'une liaison frontale et d'une liaison arrière.

Dans les faucheuses de ce type actuellement connues, il est prévu un tel patin sensiblement au niveau de chaque organe de coupe. Souvent ce patin est muni à sa partie frontale d'un organe de protection de l'organe de coupe correspondant, par l'intermédiaire duquel il est aussi lié à la partie frontale de la poutre porteuse. A sa partie arrière, le patin est lié rigidement soit à la poutre porteuse, soit à un dispositif de rigidification s'étendant derrière la poutre porteuse et destiné à rigidifier la poutre porteuse.

Bien que ces patins soient réalisés dans un acier résistant à l'usure, il est inévitable qu'ils s'usent pendant le travail à l'endroit le plus sollicité. Il peut alors arriver en pratique que cette usure atteigne un degré tel que le patin se casse à l'endroit le plus sollicité lorsque l'épaisseur de matière restante devient insuffisante. Comme la faucheuse continue d'avancer, la partie arrière du patin cassé s'accroche dans le sol au niveau de la cassure et est alors entièrement repliée vers l'arrière. Ceci entraîne l'arrachement de la liaison arrière et/ou la déformation de la poutre porteuse ou du dispositif de rigidification à l'endroit où la partie arrière du patin cassé est ou était liée.

On comprendra qu'un tel incident pourra entraîner des frais de réparation relativement élevés.

Le but de la présente invention est de résoudre ce problème.

A cet effet, la faucheuse selon la présente invention est caractérisée par le fait que la liaison arrière de chaque patin comporte des moyens de liaison qui autorisent à la partie arrière du patin de se désolidariser de la barre de coupe suivant un mouvement relatif dirigé vers l'arrière, compte tenu du sens d'avance de la faucheuse au travail.

Grâce à cette caractéristique, le problème évoqué ci-avant est éliminé. En effet, si un patin de la faucheuse selon la présente invention se casse et que sa partie arrière s'accroche dans le sol, elle pourra se désolidariser de la barre de coupe lorsque la faucheuse continue d'avancer. De ce fait, il ne se produira aucun arrachement de la liaison arrière, ni aucune déformation de la barre de coupe à l'endroit de la liaison arrière.

Selon une réalisation particulièrement avantageuse, les moyens de liaison de la liaison arrière d'un patin comportent un organe de liaison qui est lié rigidement à la barre de coupe et qui est lié au patin par accrochage dans une ouverture du patin.

D'autres caractéristiques de l'invention sont contenues dans les autres sous-revendications et ressortent clairement de la description ci-dessous de deux exemples non limitatifs de réalisation de l'invention, faite en référence au dessin annexé sur lequel :

- la figure 1 montre, en vue de dessus, une faucheuse selon l'invention, attelée à un tracteur agricole,
- la figure 2 montre à une échelle agrandie, une vue de dessus partielle du groupe de fauche de la faucheuse de la figure 1,
- la figure 3 montre une vue suivant la flèche F3 du groupe de fauche partiellement coupé suivant le plan III-III,
- la figure 4 montre une vue partielle suivant la flèche F3 de la poutre porteuse et d'un patin coupés suivant le plan IV-IV, et
- la figure 5 montre une variante de réalisation de la liaison arrière d'un patin à la barre de coupe.

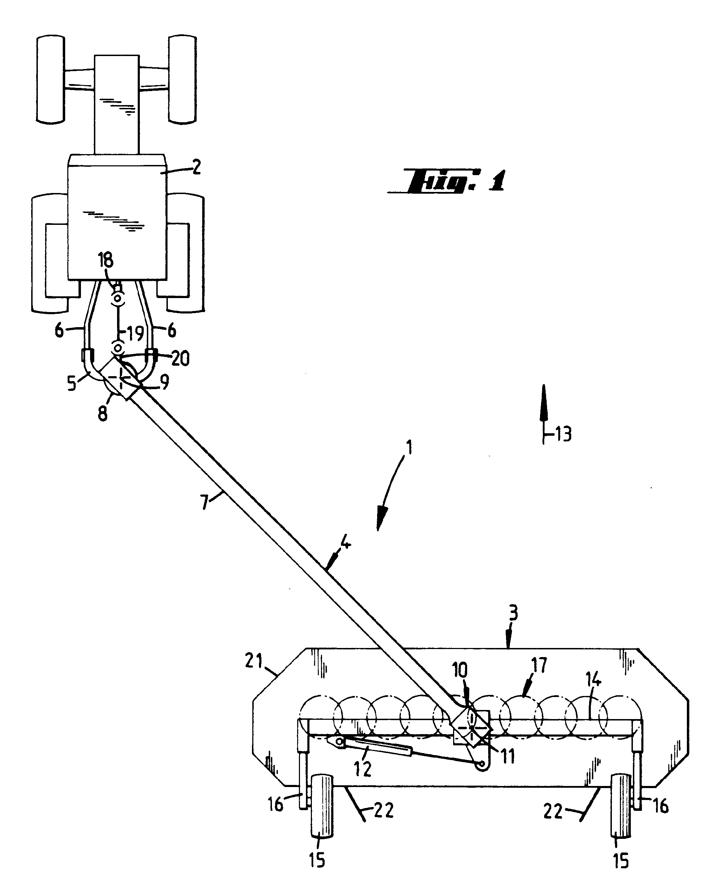

Sur la figure 1 est représentée une faucheuse (1) selon l'invention, accouplée à un tracteur agricole (2).

La faucheuse (1) se compose d'un corps (3) et d'un timon (4). Le timon (4) se compose d'un timon primaire (5) destiné à être lié aux bras inférieurs (6) de l'attelage du tracteur agricole (2) et un timon secondaire (7) lié au corps (3) de la faucheuse (1). Le timon primaire (5) est lié à la partie frontale du timon secondaire (7) par l'intermédiaire d'un dispositif de liaison (8) connu de l'homme de l'art et qui autorise notamment un pivotement du timon primaire (5) par rapport au timon secondaire (7) autour d'un axe (9) dirigé vers le haut. A sa partie arrière, le timon secondaire (7) est lié au corps (3) par l'intermédiaire d'une articulation (10) d'axe (11) dirigé vers le haut et s'étendant sensiblement au milieu du corps (3). La position du timon (4) par rapport au corps (3) peut être réglée en faisant pivoter le timon (4) autour de l'axe (11) de l'articulation (10). Le réglage de la position souhaitée et le maintien dans la position souhaitée sont réalisés par un organe de commande et de blocage (12) (un vérin hydraulique dans l'exemple représenté). Grâce à cet agencement, le corps (3) de la faucheuse (1) peut s'étendre - vu de l'arrière dans la direction de travail (13) - soit à droite, soit à gauche du tracteur agricole (2). Ceci autorise le fauchage en aller et retour.

Le corps (3) de la faucheuse (1) comporte un châssis (14) qui s'appuie sur le sol au moyen de deux roues (15) s'étendant à l'arrière du châssis (14). Les roues (15) sont chacune liées de manière articulée au châssis (14) au moyen d'un bras de roue (16) de sorte à pouvoir être déplacées par rapport audit châssis (14), grâce à l'action d'un moyen de commande non représenté, tel qu'un vérin hydraulique par exemple, en vue d'éloigner le châssis (14) du sol dans la phase de transport et de rapprocher ledit châssis (14) du sol dans la phase de travail.

Le corps (3) de la faucheuse (1) comporte par ailleurs un groupe de fauche (17) supporté par le châssis (14). L'entraînement du groupe de fauche (17) est réalisé à partir de la prise de force (18) du tracteur agricole (2) qui attaque, par l'intermédiaire d'un arbre téléscopique à joints universels (19), l'arbre d'entrée (20) du dispositif de liaison (8) qui est également d'une manière connue de l'homme de l'art un dispositif de transmission du mouvement. La transmission du mouvement depuis l'arbre d'entrée (20) jusqu'au groupe de fauche (17) n'est pas représentée étant donné qu'elle est à la portée de l'homme de l'art.

Sur la figure 1, on voit encore que le corps (3) de la faucheuse (1) est muni d'un dispositif de protection (21) et d'organes de traitement du produit coupé par le groupe de fauche (17), tels que des organes d'andainage (22).

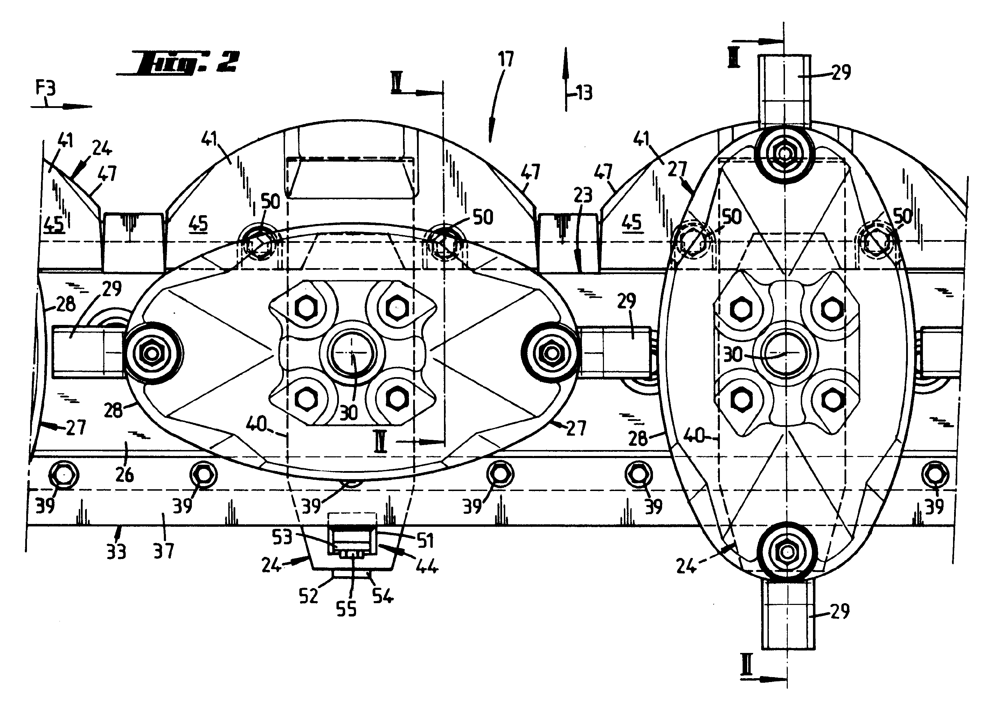

Le groupe de fauche (17) apparaît plus en détail sur les figures 2 à 4.

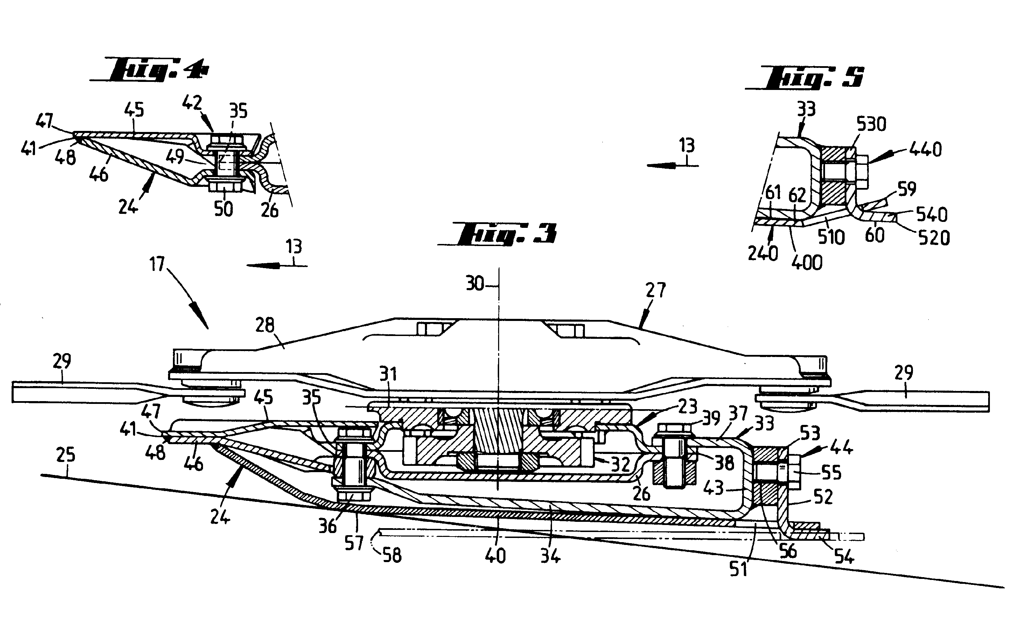

Il est muni d'une barre de coupe (23) et de patins (24) par l'intermédiaire desquels la barre de coupe (23) glisse sur le sol (25) (figure 3) pendant le travail.

La barre de coupe (23) comporte une poutre porteuse (26) et des organes de coupe rotatifs (27). Chaque organe de coupe rotatif (27) est formé par un support d'outils de coupe (28) et un certain nombre d'outils de coupe (29). Ces organes de coupe rotatifs (27) s'étendent au-dessus de la poutre porteuse (26) et tournent chacun autour d'un axe géométrique (30) dirigé vers le haut. A cet effet, chaque organe de coupe rotatif (27) est guidé en rotation dans un palier (31) lié à la poutre porteuse (26). Cette poutre porteuse (26) est réalisée sous forme de carter contenant des organes d'entraînement (32). Dans l'exemple représenté, ces organes d'entraînement (32) sont constitués par une cascade de roues dentées cylindriques engrénant les unes avec les autres.

Dans le but de limiter la flexion de la poutre porteuse (26), la barre de coupe (23) comporte aussi un organe de rigidification (33). Dans l'exemple représenté, cet organe de rigidification (33) est essentiellement composé par une tôle pliée qui présente, en vue suivant la flèche F3 (figure 2), une forme de U couché et qui a une longueur sensiblement égale à celle de la poutre porteuse (26). Ce U est ouvert vers l'avant. Sa branche inférieure (34) s'étend sous la poutre porteuse (26) jusqu'au niveau du bord frontal (35) de celle-ci, auquel elle est liée au moyen d'un certain nombre de boulons (36). La branche supérieure (37) du U est nettement plus courte et est liée au bord arrière (38) de la poutre porteuse (26) au moyen d'un certain nombre de vis (39).

Sur la figure 2, il apparaît que le groupe de fauche (17) comporte un patin (24) au niveau de chaque organe de coupe rotatif (27). Chaque patin (24) est formé par une semelle (40) qui présente la forme d'un ski et qui est liée à sa partie frontale à un organe de protection (41). Dans l'exemple représenté, cette liaison est réalisée par soudure. L'organe de protection (41) présente, en vue de dessus, une forme de secteur circulaire dont le centre se trouve sur l'axe géométrique (30) de rotation de l'organe de coupe rotatif (27) correspondant et dont le rayon est légèrement supérieur au rayon de la trajectoire extrême décrite par le support d'outils de coupe (28) correspondant.

Chaque patin (24) ainsi formé est lié au bord frontal (35) de la poutre porteuse (26) au moyen d'une liaison frontale (42) et à la branche verticale (43) du U de l'organe de rigidification (33) au moyen d'une liaison arrière (44). La liaison frontale (42) est, comme visible sur la figure 4, une liaison par pincement. A cet effet, l'organe de protection (41) est formé par une tôle supérieure (45) et une tôle inférieure (46) qui sont soudées l'une à l'autre le long de leur bord frontal circulaire (47, 48) respectif. A l'arrière, il subsiste entre les deux tôles (45, 46) un espace (49) dans lequel s'emboîte le bord frontal (35) de la poutre porteuse (26). La liaison par pincement est ensuite obtenue par deux boulons (50) qui pincent le bord frontal (35) de la poutre porteuse (26) entre les deux tôles (45, 46) de l'organe de protection (41) du patin (24).

La liaison arrière (44), quant à elle, est selon l'invention, réalisée de la manière suivante. Dans la partie arrière de la semelle (40) du patin (24) est réalisée une ouverture (51) qui, dans l'exemple représenté, est de forme rectangulaire (figure 2). Un organe de liaison (52) présentant en vue suivant la flèche F3 (figure 2) une forme en L, s'étend au travers de l'ouverture (51) et lie le patin (24) à l'organe de rigidification (33). A cet effet, l'organe de liaison (52) comporte d'une part une branche (53) dirigée vers le haut et traversant l'ouverture (51) prévue dans la partie arrière de la semelle (40) du patin (24), et d'autre part, une branche (54) dirigée vers l'arrière et s'étendant sous la semelle (40) du patin (24). L'organe de liaison (52) est lié à l'organe de rigidification (33) par une vis (55) qui traverse la branche (53) de l'organe de liaison (52) et qui est vissée dans un trou fileté (56) prévu à cet effet dans l'organe de rigidification (33). L'organe de liaison (52) ainsi prévu est donc d'une part lié rigidement mais de manière démontable à l'organe de rigidification (33), c'est-à-dire à la barre de coupe (23), et d'autre part au patin (24) par accrochage dans l'ouverture (51). Sur les figures 2 et 3, il apparaît encore que l'ouverture (51) a une dimension suffisante permettant le passage de la branche (54) de l'organe de liaison (52) lors de la désolidarisation de la partie arrière de la semelle (40) cassée et de l'organe de liaison (52) tel qu'il sera décrit plus loin.

Le montage d'un patin (24) sur la barre de coupe (23) s'effectue de la manière suivante :
- on glisse le patin (24) sur le bord frontal (35) de la poutre porteuse (26),

- on pince le bord frontal (35) de la poutre porteuse (26) entre les deux tôles (45, 46) du patin (24) à l'aide des boulons (50),
- on introduit la branche (53) de l'organe de liaison (52) par en-dessous dans l'ouverture (51) du patin (24), et
- on visse l'organe de liaison (52) à la barre de coupe (23) au moyen de la vis (55).

L'intérêt de cette liaison arrière (44) apparaît dans la description ci-dessous.

Au travail, la barre de coupe (23) glisse sur le sol (25) en prenant appui sur les patins (24). Ce faisant, la zone (57) des patins (24) est soumise à une très forte usure. Si un patin (24) usé n'est pas remplacé à temps, l'épaisseur de la matière peut devenir insuffisante dans la zone (57), de sorte que la semelle (40) du patin (24) peut casser à cet endroit (la partie arrière d'une semelle 40) cassée a été représentée en traits mixtes sur la figure 3). Comme la faucheuse continue d'avancer dans le sens de la flèche (13), l'arête frontale (58) de la partie arrière de la semelle (40) cassée peut s'accrocher dans le sol (25). Ceci provoquera alors l'arrêt immédiat de cette partie arrière de la semelle (40) cassée et sa désolidarisation de l'organe de liaison (52). Cette désolidarisation est parfaitement possible, étant donné que l'ouverture (51) est assez grande pour permettre le passage de la branche (54) de l'organe de liaison (52).

Sur la figure 5 est représenté un autre exemple de réalisation d'une liaison arrière (440) d'un patin (240). Cet exemple de réalisation est quelque peu plus onéreux que l'exemple précédent, mais facilite la désolidarisation de la partie arrière de la semelle (400) cassée.

Dans cet exemple de réalisation, l'organe de liaison (520) est semblable à l'organe de liaison (52) précédent dans la mesure où il présente également la forme d'un L ayant une branche (540) dirigée vers l'arrière et une branche (530) dirigée vers le haut.

La semelle (400) du patin (240) comporte à son extrémité arrière une partie (59) inclinée vers l'arrière et vers le haut. L'ouverture (510) qui est traversée par la branche (530) dirigée vers le haut, est réalisée pour l'essentiel dans cette partie inclinée (59). L'agencement est réalisé de telle sorte que lorsque l'organe de liaison (520) est lié à la barre de coupe (23), la face inférieure (60) de la branche (540) dirigée vers l'arrière est au moins sensiblement située au même niveau que la face supérieure (61) de la partie (62) de la semelle (400) située, compte tenu du sens d'avance (13), directement devant l'organe de liaison (520).

Les exemples qui viennent d'être décrits ne sont que des réalisations préférées de l'idée générale enseignée par la présente invention telle qu'elle a été caractérisée dans les revendications.

**Revendications**

1. Faucheuse (1) comportant un groupe de fauche (17) muni d'une barre de coupe (23) qui comporte une poutre porteuse (26) et des organes de coupe rotatifs (27) s'étendant au-dessus de la poutre porteuse (26) et tournant chacun autour d'un axe géométrique (30) dirigé vers le haut, une partie au moins de ces organes de coupe rotatifs (27) étant guidés en rotation dans la poutre porteuse (26), le groupe de fauche (17) étant par ailleurs muni de patins (24; 240) par l'intermédiaire desquels la barre de coupe (23) glisse sur le sol (25) pendant le travail, chacun de ces patins (24; 240) étant lié à la barre de coupe (23) au moyen d'une liaison frontale (42) et d'une liaison arrière (44; 440), caractérisée par le fait que la liaison arrière (44; 440) comporte des moyens de liaison (51, 52; 510, 520) qui autorisent à la partie arrière du patin (24; 240) de se désolidariser de la barre de coupe (23) suivant un mouvement relatif dirigé vers l'arrière compte tenu du sens d'avance (13) de la faucheuse (1) au travail.

2. Faucheuse selon la revendication 1, caractérisée par le fait que les moyens de liaison (51, 52; 510, 520) comportent un organe de liaison (52; 520) qui est lié rigidement à la barre de coupe (23) et qui est lié au patin (24; 240) par accrochage dans une ouverture (51; 510) du patin (24; 240).

3. Faucheuse selon la revendication 2, caractérisée par le fait que l'organe de liaison (52; 520) présente une forme de L qui comporte une branche (54; 540) dirigée vers l'arrière et une branche (53; 530) dirigée vers le haut, la branche (54; 540) dirigée vers l'arrière s'étendant sous le patin (24; 240) tandis que la branche (53; 530) dirigée vers le haut traverse l'ouverture (51; 510) prévue dans le patin (24; 240), ladite ouverture (51; 510) ayant une dimension suffisante pour permettre le passage de la branche (54; 540) dirigée vers l'arrière lors de la désolidarisation de la partie arrière du patin (24; 240).

4. Faucheuse selon la revendication 3, caractérisée par le fait que la face inférieure (60) de la branche (540) dirigée vers l'arrière s'étend au moins sensiblement au même niveau que la face supérieure (61) de la partie (62) du patin (240) s'étendant, compte tenu du sens d'avance (13), directement devant l'organe de liaison (520).

5. Faucheuse selon la revendication 4, caractérisée par le fait que l'ouverture (510) est au moins partiellement réalisée dans une partie (59) du patin (240) inclinée vers le haut.

6. Faucheuse selon l'une au moins des revendications 3 à 5, caractérisée par le fait que l'organe de liaison (52; 520) est lié à la barre de coupe (23) par l'intermédiaire de la branche (53; 530) dirigée vers le haut.

7. Faucheuse selon l'une au moins des revendications 2 à 6, caractérisée par le fait que l'organe de liaison (52; 520) est lié de manière démontable à la barre de coupe (23).

8. Faucheuse selon l'une au moins des revendications 1 à 7, caractérisée par le fait que la poutre porteuse (26) est réalisée sous forme de carter dans lequel s'étendent des organes d'entraînement (32) des organes de coupe rotatifs (27), qu'à la partie arrière (38) de ce carter est lié un organe de rigidification (33) destiné à rigidifier le carter, et que chaque patin (24; 240) est lié à sa partie arrière à l'organe de rigidification (33).

**Claims**

1. Mower (1) comprising a mowing group (17) provided with a cutterbar (23) comprising a carrying beam (26) and rotary cutting elements (27) extending above the carrying beam (26) and each rotating around an upwardly directed geometric axis (30), at least some of these rotary cutting elements (27) being guided in rotation in the carrying beam (26), the mowing group (17) being moreover provided with skids (24 ; 240) by which the cutterbar (23) slides over the soil (25) during work, each one of these skids (24 ; 240) being connected to the cutterbar (23) by the means of a front connection (42) and a rear connection (44 ; 440), characterized in that the rear connection (44 ; 440) comprises connection means (51, 52 ; 510, 520) that allow the rear part of the skid (24 ; 240) to separate from the cutterbar (23) according to a relative movement directed backwardly when considering the direction of advance (13) of the mower (1) at work.

2. Mower according to claim 1, characterized in that the connection means (51, 52 ; 510, 520) comprise a connecting element (52 ; 520) which is rigidly connected to the cutterbar (23) and which is connected to the skid (24 ; 240) by hooking in an opening (51 ; 510) of the skid (24 ; 240).

3. Mower according to claim 2, characterized in that the connecting element (52 ; 520) exhibits an L-shape that comprises a backwardly directed branch (54 ; 540) and an upwardly directed branch (53 ; 530), the backwardly directed branch (54 ; 540) extending under the skid (24 ; 240), while the upwardly directed branch (53 ; 530) goes through the opening (51 ; 510) provided in the skid (24 ; 240), said opening (51 ; 510) having a sufficient dimension to allow the passage of the backwardly directed branch (54 ; 540) during the separation of the rear part of the skid (24 ; 240).

4. Mower according to claim 3, characterized in that the lower face (60) of the backwardly directed branch (540) extends at least approximately at the same level as the upper face (61) of the part (62) of the skid (240) extending, considering the direction of advance (13), directly in front of the connecting element (520).

5. Mower according to claim 4, characterized in that the opening (510) is made at least partially in an upwardly inclined part (59) of the skid (240).

6. Mower according to at least one of claims 3 to 5, characterized in that the connecting element (52 ; 520) is connected to the cutterbar (23) by the means of the upwardly directed branch (53 ; 530).

7. Mower according to at least one of claims 2 to 6, characterized in that the connecting element (52 ; 520) is detachably connected to the cutterbar (23).

8. Mower according to at least one of claims 1 to 7, characterized in that the carrying beam (26) is made in the form of a gearbox in which driving elements (32) of the rotary cutting elements (27) extend, that at the rear part (38) of this gearbox is connected a stiffening element (33) for the stiffening of the gearbox, and that each skid (24 ; 240) is connected to the stiffening element (33) at its rear part.

**Patentansprüche**

1. Mähmaschine (1) mit einer Mäheinheit (17), die einen Mähbalken (23) aufweist, welcher mit einem Tragbalken (26) und mit sich über dem Tragbalken (26) erstreckenden und je um eine nach oben gerichtete geometrische Achse (30) drehenden rotierenden Schneidorganen (27) versehen ist, wovon mindestens einige drehbar im Tragbalken (26) geführt sind, wobei die Mäheinheit (17) ferner Gleitkufen (24 ; 240) aufweist, mittels welchen der Mähbalken (23), während der Arbeit, auf dem Boden (25) gleitet und wovon jeder mittels einer vorderen Verbindung (42) und einer hinteren Verbindung (44 ; 440) mit dem Mähbalken (23) verbunden ist, dadurch gekennzeichnet, dass die hintere Verbindung (44 ; 440) Verbindungsmittel (51, 52 ; 510, 520) aufweist, die es dem hinteren Teil der Gleitkufe (24 ; 240) ermöglichen, sich mit einer relativen, bezugnehmend auf die Vorwärtsrichtung (13) der Mähmaschine (1) während der Arbeit, nach hinten gerichtete Bewegung von dem Mähbalken (23) zu trennen.

2. Mähmaschine nach Anspruch 1, dadurch gekennzeichnet, dass die Verbindungsmittel (51, 52 ; 510, 520) ein Verbindungsorgan (52 ; 520) aufweisen, welches fest mit dem Mähbalken (23) und mit der Gleitkufe (24 ; 240) mittels Verhakens in einer Öffnung (51 ; 510) der Gleitkufe (24 ; 240) verbunden ist.

3. Mähmaschine nach Anspruch 2, dadurch gekennzeichnet, dass das Verbindungsorgan (52 ; 520) die Form eines L aufweist, die mit einem nach hinten gerichteten Flügel (54 ; 540) und einem nach oben gerichteten Flügel (53 ; 530) versehen ist, wobei der nach hinten gerichtete Flügel (54 ; 540) sich unter der Gleitkufe (24 ; 240) erstreckt, während der nach oben gerichtete Flügel (53 ; 530) durch eine in der Gleitkufe (24 ; 240) vorgesehene Öffnung (51 ; 510) ragt, welche eine derartig ausreichende Grösse hat, um den Durchgang des nach hinten gerichteten Flügels (54 ; 540) während des Trennens des hinteren Teils der Gleitkufe (24 ; 240) zu ermöglichen.

4. Mähmaschine nach Anspruch 3, dadurch gekennzeichnet, dass die untere Seite (60) des nach hinten gerichteten Flügels (540) sich mindestens etwa auf der gleichen Höhe erstreckt, wie die obere Seite (61) des Teils (62) der Gleitkufe (240), der sich, bezugnehmend auf die Vorwärtsrichtung (13), unmittelbar vor dem Verbindungsorgan (520) befindet.

5. Mähmaschine nach Anspruch 4, dadurch gekennzeichnet, dass die Öffnung (510) mindestens teilweise in einem nach oben geneigten Teil (59) der Gleitkufe (240) vorgesehen ist.

6. Mähmaschine nach zumindest einem der Ansprüche 3 bis 5, dadurch gekennzeichnet, dass das Verbindungsorgan (52 ; 520) mittels des nach oben gerichteten Ffügels (53 ; 530) mit dem Mähbalken (23) verbunden ist.

7. Mähmaschine nach zumindest einem der Ansprüche 2 bis 6, dadurch gekennzeichnet, dass das Verbindungsorgan (52 ; 520) demontierbar mit dem Mähbalken (23) verbunden ist.

8. Mähmaschine nach zumindest einem der Ansprüche 1 bis 7, dadurch gekennzeichnet, dass der Tragbalken (26) durch ein Gehäuse gebildet ist, in welchem sich Antriebsorgane (32) der rotierenden Schneidorgane (27) erstrecken, dass an der hinteren Seite (38) dieses Gehäuses ein zur Versteifung des Gehäuses dienendes Versteifungsorgan (33) befestigt ist, und, dass jede Gleitkufe (24 ; 240) an seinem hinteren Teil mit dem Versteifungsorgan (33) verbunden ist.

*Fig. 1*

Fig. 2

Fig. 4

Fig. 5

Fig. 3

EP 0 360 716 B1